# EUROPEAN PATENT SPECIFICATION

(11) **EP 2 371 919 B1**
(45) Date of publication and mention of the grant of the patent: **20.06.2012**
(21) Application number: 10003666.4
(22) Date of filing: 01.04.2010
(51) Int. Cl.: C09J 123/08, C09J 165/00

(54) **Hot-melt adhesive comprising a mixture of vegetable wax and high molecular weight wax**
Heißschmelzkleber mit einer Mischung aus Pflanzenwachs und Wachs mit hohem Molekulargewicht
Adhésif thermofusible comportant un mélange de cire végétale et cire à fort poids moléculaire

(43) Date of publication of application: 05.10.2011
(73) Proprietor: H.B. Fuller Company, St. Paul, Minnesota 55164-0683 (US)
(72) Inventor: Nicolaus, Katrin, 21335 Lüneburg (DE); Henke, Stefanie, 21522 Hittbergen (DE)
(74) Representative: Maiwald Patentanwalts GmbH

(56) References cited:
- WO-A1-2008/008420
- WO-A1-2008/122028
- WO-A1-2010/028119
- US-A1- 2003 229 168

## Description

### Field of the invention

The present invention relates to a hot-melt adhesive composition comprising a vegetable wax and a high molecular weight wax. The present invention further relates to the use of the hot-melt adhesive composition in various applications, such as heat seal applications and packaging including food packaging.

### Background of the invention

Hot-melt adhesive compositions are well known in the art. Such hot-melt adhesives are applied to a substrate when molten, and then placed in contact with a second substrate. The adhesive cools and hardens to form a bond between the substrates. Hot melts are widely used for industrial adhesive applications such as product assembly and packaging including food packaging.

Packaging hot-melt adhesives are typically composed of three components: (a) a polymer; (b) a tackifying agent; and (3) a wax component. The polymer provides the formulation with its strength and adhesive characteristics. Typically, a thermoplastic polymer is used. The tackifying agent allows the thermoplastic polymer to be more adhesive by improving wetting during the application. Tackifying agents are added to give tack to the adhesive and also to lower viscosity. Tack is required in most adhesive formulations to allow for proper joining of articles prior to the hot melt adhesive solidifying. One function of the wax component is to lower the viscosity of the hot-melt adhesive. Low viscosity helps to lower application temperatures, provide cleaner processing, and also good wet out of the substrates. Furthermore, a low viscosity allows for liquefaction of the hot-melt adhesive. In addition, due to the presence of the wax component, the hot-melt adhesive crystallizes quickly which helps the material to harden or set quickly. Thus, the wax component also controls the open time and set speed of the system.

Currently used hot-melt adhesives comprise petroleum-derived waxes such as paraffin wax. The lower molecular weight of paraffin wax makes it a primary choice when formulating hot-melt adhesives especially for low temperature applications.

US 2008/0249233 relates to low application temperature applied hot-melt adhesives that comprise a vegetable derived wax and a paraffin wax. The vegetable derived wax is employed for providing a low application temperature and for reducing the dependency on the use of paraffin wax. Thus, the need for hot-melt adhesives being free from paraffin is not recognized in US 2008/0249233.

US 2008/0249216 discloses hot melt adhesives that comprise a vegetable derived wax such as soy wax. The hot-melt adhesive further comprises a synthetic wax and/or paraffin wax. The object of the document is the provision of hot-melt adhesives suitable for low application temperatures. This is accomplished by using a low molecular weight wax component based on vegetable derived wax. The need for hot-melt adhesives being free from paraffin is also not recognized in US 2008/0249216.

WO 03/104348 describes a vegetable wax for use in hot-melt adhesives comprising triglycerides with a melting point of from about 50-70°C. Because the waxes have melting points that are lower than the melting points of many waxes traditionally used in hot melt adhesives, the compositions of WO 03/104348 are said to have melting points which are towards the low end of the melting point spectrum of hot melt adhesives. The document is not concerned with a hot-melt adhesive composition having reduced potential of contamination while maintaining other overall characteristics of the hot melt such as sufficient bond strength and open time, and the absence of blocking.

A great advantage of hot-melt adhesives is that they result in less contamination during application. However, low molecular weight components of the hot-melt adhesive may be subject of migration after application thereby causing contamination of e.g. an item packaged in a package provided by means of the hot-melt adhesive. In particular, there is a concern that packaged food items may be contaminated when being packaged in a package comprising a hot-melt adhesive, which is undesirable. Low molecular weight paraffin waxes are especially migratable in contact with fatty food. Therefore, there is in the meantime a migration limit for use of low molecular weight paraffin waxes in contact with fatty food due to changes in European food regulations (EU 2002/72). Consequently, there is a need to replace the paraffin wax in a hot-melt adhesive composition with components that give raise to less health and migration concerns without compromising the overall properties of the hot melt such as bond strength, open time and absence of blocking.

### Summary of the invention

The object of the present invention is the provision of a hot-melt adhesive being free from paraffin.

A further object of the present invention is to provide a hot-melt adhesive having a reduced migration level.

An additional object of the present invention is the provision of a hot-melt adhesive having a reduced migration level especially in contact with food such as fatty food due to the absence of paraffin.

A further object of the present invention is to provide a hot-melt adhesive meeting the above objects with compromising other characteristics of the hot-melt adhesive such as application temperature, heat seal bond strength, open time, slipping properties and absence of blocking.

An additional object of the present invention is the provision of a hot-melt adhesive having, on the one hand, a reduced migration level especially in contact with food such as fatty food due to the absence of paraffin, while, on the other hand, maintaining other properties of the hot-melt adhesive such as application temperature, bond strength, open time and absence of blocking.

The above objects are solved by the present invention by providing a hot-melt adhesive composition being free from paraffin, wherein the composition comprises a mixture of a vegetable wax and a high molecular weight wax.

Such as conventional hot-melt adhesive compositions, the hot-melt adhesive composition of the invention typically comprises (a) a polymer; (b) a tackifying agent; and (c) the mixture of vegetable wax and high molecular weight wax.

In a preferred embodiment, the weight ratio of vegetable wax to high molecular weight wax is 15:1 to 2:1, preferably 12:1 to 3:1, more preferably 6:1 to 4:1.

The hot-melt adhesive composition further comprises in a preferred embodiment the polymer in an amount of 15 to 50 weight%, based on the total weight of the hot-melt adhesive composition. More preferably, the polymer is comprised in the hot-melt adhesive composition according to the present invention in an amount of 20 to 45 weight%, more preferably 30 to 40 weight%.

The hot-melt adhesive composition further comprises in a preferred embodiment the tackifying agent polymer in an amount of 5 to 50 weight%, based on the total weight of the hot-melt adhesive composition. More preferably, the tackifying agent is included in an amount of 10 to 40 weight%, more preferably 25 to 35 weight%.

The hot-melt adhesive composition further comprises in a preferred embodiment the mixture of vegetable wax and high molecular weight wax in an amount of 10 to 80 weight%, based on the total weight of the hot-melt adhesive composition. More preferably, the mixture of vegetable wax and high molecular weight wax is included in an amount of 25 to 65 weight%, still more preferably 25 to 60 weight%. Subject to the preferred feature relating to the ratio of vegetable wax to high molecular weight wax above, the vegetable wax is preferably included in the hot-melt adhesive in an amount of 5 to 75 weight%, more preferable in an amount of 15 to 60 weight%, while the high molecular weight wax is included in an amount of 5 to 20 weight%, more preferably in an amount of 5 to 15 weight%.

The present invention is not specifically limited with respect o the vegetable wax being used. Particularly useful vegetable waxes include waxes derived from hydrogenated oils of the aforementioned plant sources. Preferably, the vegetable waxes according to the present invention include waxes derived from hydrogenated oils of canola, palm and soybean. Hydrogenated canola oil and palm oil is more preferred.

In a preferred embodiment, the vegetable wax has an iodine value of less than 30.

In another preferred embodiment, the vegetable wax has a melting point of has a melting point of 45°C to 90°C, preferably 50°C to 80°C.

In a preferred embodiment of the present invention, the high molecular weight wax has a relatively high average molecular weight of more than 500, a content of hydrocarbons with a carbon number of less than 25 of below to 5 weight%, a viscosity at 100°C of not less than 11 cSt. Preferred examples thereof include a polyethylene wax, an oxidized polyethylene wax, a Fischer-Tropsch wax, or a microcrystalline wax. A polyethylene wax is more preferred.

The present invention is not specifically limited with respect to the polymer being used. In a preferred embodiment, the adhesives of the invention comprise at least one ethylene polymer, and may comprise a blend of two or more polymers. The thermoplastic polymer is preferably selected from ethylene copolymers such as ethylene vinyl acetate (EVA).

The present invention is not specifically limited with respect to the tackifying agent being used. Rather, any tackifying agent that in principle can be employed in hot-melt adhesive compositions can be used according to the present invention.

The hot-melt adhesive composition according to the present invention preferably has a viscosity at 150°C of 100 to 10000 mPas, more preferably from 500 to 7000 mPas. In addition, in a preferred embodiment, the hot-melt adhesive has a Mettler drop melting point of 90°C or more.

The present invention further relates to the use of a hot-melt adhesive composition as defined above for heat seal applications. The present invention also features the use of a hot-melt adhesive composition as defined above for packaging applications. In a preferred embodiment, the heat seal application is packaging. In a more preferred embodiment, the hot-melt adhesive of the present invention is used for food packaging. The advantages of the present invention are especially apparent when being used for the packaging of fatty food. In some embodiments, the hot-melt adhesive of the present invention is in direct food contact.

In one embodiment, the hot-melt adhesive of the present invention may be applied as follows: obtaining at least one substrate comprising a coating of the hot-melt adhesive as defined above; placing a food article within the substrate; and heat reactivating the hot-melt adhesive to form a packaged food article.

The hot-melt adhesive of the present invention is particularly suitable for heat seal applications. A heat seal adhesive is a thermoplastic adhesive that is pre-applied to a substrate as a molten liquid coating and then cooled to a solid. When a bond is required the coated substrate is then heat reactivated. The bond made can be either coated hot melt to coated hot melt or coated hot melt to un-coated substrate.

The present invention also relates to a substrate comprising a coating of the hot-melt adhesive composition as defined above. In a preferred embodiment, the substrate is select from a group consisting of paper, metal foil, and plastic films.

### Detailed description of the invention

In reference to the invention, the term "hot melt adhesive composition" means a solvent-free adhesive composition that is applied out of a molten state.

The term "paraffin" or "paraffin wax" is understood as usual in the art. Thus, the expression "being free from paraffin" is defined according to the present invention in terms of European Food Regulation EU 2002/72 Reference Number: 95858. That is to say, the product needs to be free of waxes derived from petroleum based or synthetic hydrocarbon feedstocks that do not meet the specifications defined in EU2002/72. As such the product needs to be free of waxes derived from petroleum based or synthetic hydrocarbon feedstocks with any one of the following properties: average molecular weight of less than 500; kinematic viscosity at 100°C of less than 11 cSt; content of hydrocarbons with a carbon number less than 25 of more than 5 weight%. In connection with the definition of paraffin in EU 2002/72, the average molecular weight refers to number average molecular weight.

Further, the hot melt adhesives of this application are specifically intended for direct food contact applications. As such, all raw materials present in the product preferably meet the requirements of EU 2002/72.

The present invention is not specifically limited with respect o the vegetable wax being used. Rather any vegetable wax that in principle can be used in hot-melt adhesive compositions can be employed according to the present invention. In a preferred embodiment, the vegetable wax is selected from wax derived from at least one plant source including, e.g., soybean, cottonseed, corn, sunflower, canola, palm, coconut, rape, carambe, and linseed. Particularly useful waxes include waxes derived from hydrogenated oils of the aforementioned plant sources. Preferably, the vegetable waxes according to the present invention include waxes derived from hydrogenated oils of canola, palm and soybean. Hydrogenated canola oil and/or palm oil is more preferred. The vegetable wax preferably is a high triglyceride wax having greater than 90 weight% triglyceride with trace amounts of fatty acids. Suitable waxes include 98 weight% triglyceride with trace amounts of fatty acids including, e.g., stearic acid, palmitic acid, myristic acid, and oleic acid and combinations thereof. It is understood that a mixture of two or more vegetable waxes can be used instead of one single vegetable wax. Useful waxes are commercially available, for example, from Archer Daniels Midland (ADM) (Decatur, I11.), e.g., under the product number designation ADM Vegetable Wax Product Code 866970, from Cargill Incorporated (Wayzata, Minn.), e.g., under the product designation Stable Flake S, from Custom Shortenings & Oils (Richmond, Va.), e.g. under product designation Master Chef Stable Flake-P palm oil wax, and from Marcus Oil and Chemical Corp. (Houston, Tex.), e.g., under the product designations Marcus Nat 155, Marcus Nat 135, and Marcus Nat 125 for soybean waxes.

The present invention is not specifically limited with respect to the high molecular weight wax being used. The high molecular weight wax is typically a synthetic wax. Moreover, the high molecular weight wax meets the requirements set forth in EU 2002/72; Reference Number: 95859. A commercially available example of a suitable polyethylene wax is Viscowax 114 available from Innospec Leuna GMBH (Leuna, Germany). A mixture of two or more different high molecular weight waxes may be used instead of one single high molecular weight wax.

The present invention is not specifically limited with respect to the polymer being used. Rather, any polymer that in principle can be used in hot-melt compositions is suitable according to the present invention. This refers to thermoplastic polymers selected, e.g., from ethylene and propylene homo- and co-polymers and mixtures thereof. Preferred for use are ethylene copolymers. Examples are ethylene copolymers with vinyl acetate, n-butyl acrylate, n-hexyl acrylate, butene, octene, acrylic acid, and methacrylic acid. Also useful are amorphous poly-α-olefins such as atactic propylene, and propylene copolymers with ethylene, butene, hexene, and octene.

The adhesives of the invention will preferably comprise at least one ethylene polymer, and may comprise a blend of two or more polymers. The term ethylene polymer, as used herein, refers to homopolymers, copolymers and terpolymers of ethylene. Preferred are copolymers of ethylene with one or more polar monomers, such as vinyl acetate or other vinyl esters of monocarboxylic acids, or acrylic or methacrylic acid or their esters with methanol, ethanol or other alcohols. Included are ethylene vinyl acetate, ethylene methyl acrylate, ethylene n-butyl acrylate, ethylene acrylic acid, ethylene methacrylate, ethylene 2-ethylhexylacrylate, ethylene octane, ethylene butene and mixtures and blends thereof. In an embodiment of the invention, ethylene n-butyl acrylate and ethylene vinyl acetate, as well as mixtures thereof, are particularly preferred.

In a preferred embodiment, the thermoplastic polymer is selected from ethylene copolymers such as ethylene vinyl acetate (EVA). A particularly preferred polymer such as EVA has a melt index of 7 to 2400, more preferably from 40 to 1000, most preferably from 50 to 500. In the ethylene copolymer, the content of comonomer (e.g. vinyl acetate) is preferably 10 to 40 weight%, more preferably from 15 to 30 weight%. More than one ethylene copolymer may be used to optimize the melt index and comonomer (such as VA) content. Some preferred examples of ethylene vinyl acetate copolymers include: Escorene Ultra UL 40028CC and Escorene Ultra UL 15019 CC both available from ExxonMobile Chemical. A second polymer may be added in addition to the first to further optimize properties, e.g., a polyethylene polymer may be used in combination with ethylene vinyl acetate.

The present invention is not specifically limited with respect to the tackifying agent being used. Rather, any tackifying agent that in principle can be employed in hot-melt adhesive compositions can be used according to the present invention. Useful tackifying agents include, e.g., natural and modified rosins such as gum rosin, wood rosin, tall oil rosin, distilled rosin, hydrogenated rosin, dimerized rosin and polymerized rosin; rosin esters such as glycerol and pentaerythritol esters of natural and modified rosins including, e.g., glycerol esters of pale, wood rosin, glycerol esters of hydrogenated rosin, glycerol esters of polymerized rosin, pentaerythritol esters of hydrogenated rosin and phenolic-modified pentaerythritol esters of rosin; phenolic modified terpene, alpha methyl styrene resins and hydrogenated derivatives thereof including, e.g., the resin product resulting from the condensation in an acidic medium of a bicyclic terpene and a phenol; aliphatic petroleum hydrocarbon resins having a Ball and Ring softening point of from about 70°C to 135°C; the latter resins resulting from the polymerization of monomers consisting primarily of olefins and diolefins; including hydrogenated aliphatic petroleum hydrocarbon resins; aromatic petroleum hydrocarbon resins, and mixed aromatic and aliphatic paraffin hydrocarbon resins and the hydrogenated derivatives thereof; aromatic modified alicyclic petroleum hydrocarbon resins and the hydrogenated derivatives thereof; alicyclic petroleum hydrocarbon resins and the hydrogenated derivatives thereof; low molecular weight polylactic acid; and combinations thereof. Preferred are those tackifying resins which are listed in the plastic directive EU 2002/72 (relating to plastic materials and articles intended to come into contact with foodstuffs) without any specific migration limit (SML).

The present invention may provide hot-melt adhesives consisting of or consisting essentially of the above components, i.e., the thermoplastic polymer, the tackifying agent and the mixture of vegetable wax and high molecular weight wax. On the other hand, provided that the objects of the present invention are not compromised, the hot-melt adhesive may also include other components typically used in hot-melt adhesives. For example, the hot-melt adhesive compositions can optionally include additives such as, e.g., stabilizers, antioxidants, pigments, dyes, ultraviolet light absorbers, anti-slip agents and combinations thereof. Useful antioxidants include high molecular weight hindered phenols and multifunctional phenols. Useful stabilizers include phosphites, such as tris-(p-nonylphenyl)-phosphite (TNPP) and bis(2,4-di-tert-butylphenyl)4,4'-diphenylene-diphosphonite and di-stearyl-3,3'-thiodipropionate (DSTDP). Useful antioxidants are commercially available under trade designation IRGANOX, including IRGANOX 1010, from Ciba (Terrytown, N.Y.), and under the trade designation BNX, including BXN 1010, from Mayzo, Inc. (Norcross, Ga.). Useful anti-slip agents are silicone oils. Examples thereof are commercially available, e.g., under the trade designation Tegiloxan and available from Goldschmidt Industrial Specialties.

The substrate comprising a coating of the hot-melt adhesive composition as defined above is preferably selected from paper, coated paper, paper composites, metal foils (e.g. aluminum), films including (e.g. polyester (e.g. PET), polyethylene and polypropylene and film composites. More preferably, the substrate is select from a group consisting of paper, metal foil, and plastic films. The most common end uses are sweet wrappers (e.g. gum, candy, and chocolate) and cheese and bread wrappers.

The invention will now be described by way of the following examples. All parts, ratios, percents and amounts stated are by weight unless otherwise specified.

### Examples

In the context of the present invention, unless indicated otherwise, the drop melting point is determined in accordance DIN 51801, part 2.

The iodine value is determined according to ASTM test method D1959-97 or DIN 53241.

The Brookfield viscosity is determined according to ASTM D 3236-88.

The heat seal bond test is done with Hot Melt coated paper (unprinted Paper from Ahlstrom; Gerstar, 404 l, 97g/m²) using the heat seal equipment from Brugger Feinmechanik GmbH, Germany. The sealing conditions are determined by pressure of 5 N/cm² and sealing time of 0.5 seconds. For sealing Hot Melt coating against Hot Melt coating (mentioned on Table 1 as i/i - internal German short description "Innenseite gegen Innenseite"') both sealing bars are heated to 90°C (mentioned on Table 1 as 90°C/90°C). For sealing Hot Melt coating against the printing side (outside) of Paper (mentioned on Table 1 as i/a - internal German short description "Innenseite gegen Außenseite") only the upper sealing bar is heated to 120°C. The lower sealing bar is 23°C (mentioned on Table 1 as 120°C/23°C). For sealing Hot Melt coating against the Polystyrene (mentioned on Table 1 as PS/i - internal German short description "Polystyrol gegen Innenseite") both sealing bars are heated to 90°C (mentioned on Table 1 as 90°C/90°C).

To determine the lowest activation heat seal temperature, the hot melt coated papers are sealed at different temperatures and against different substrates (paper, polystyrene), starting with a temperature of 65°C and increasing temperature by 5°C.

The heat seal bond strength is measured with the T-Peel test according to the ASTM D 1876-06. The measured samples have a width 15 mm. The equipment for this test method is from Lloyd Instruments (Material Testing Machines).

The coefficient of friction is measured with a friction tester from Instrumentors, inc. now IMASS inc according to Tappi 664. Test condition speed 90cm/min, weight of the test specimen is 180g and its dimension is 2.5 x 7.5 x 1.2 cm. The Hot Melt coated paper is fixed to the bottom area of the specimen (2.5 cm x 7.5cm). The hot melt side is facing to the material the COF is tested against. Material can be coated Hot Melt on paper, printing side of paper, stainless steel.

The melting temperature of the coating is evaluated using the "Kotlerbank" equipment. It consists of a heatable bar with temperature gradient and a scale. The hot melt coated paper is placed on the heated bar with the hot melt facing to the bar. The "Kofler" melting temperature is the temperature where the hot melt starts to melt on the heated bar.

### Example 1

A composition was prepared by formulating 15 weight% vegetable wax (derived from palm oil), 10 weight% high molecular weight polyethylene wax, 45 weight% ethylene vinyl acetate copolymer, 10 weight% of terpene phenolic tackifying agent and 20 weight% of rosin ester tackifying agent. The results are shown in Table I below.

### Example 2

A composition was prepared by formulating 15 weight% vegetable wax (fatty acid ester based), 10 weight% high molecular weight polyethylene wax, 45 weight% ethylene vinyl acetate copolymer, 10 weight% of terpene phenolic tackifying agent and 20 weight% of rosin ester tackifying agent. The results are shown in Table I below.

### Example 3

A composition was prepared by formulating 20 weight% vegetable wax (derived from palm oil), 5 weight% high molecular weight polyethylene wax, 40 weight% ethylene vinyl acetate copolymer, 20 weight% of terpene phenolic tackifying agent and 15 weight% of rosin ester tackifying agent. The results are shown in Table I below.

### Example 4

A composition was prepared by formulating 20 weight% vegetable wax (fatty acid ester based), 5 weight% high molecular weight polyethylene wax, 40 weight% ethylene vinyl acetate copolymer, 20 weight% of terpene phenolic tackifying agent and 15 weight% of rosin ester tackifying agent. The results are shown in Table I below.

### Example 5

A composition was prepared by formulating 20 weight% vegetable wax (derived from canola oil), 5 weight% high molecular weight polyethylene wax, 40 weight% ethylene vinyl acetate copolymer, 20 weight% of terpene phenolic tackifying agent and 15 weight% of rosin ester tackifying agent. The results are shown in Table I below.

### Example 6

A composition was prepared by formulating 60 weight% vegetable wax (derived from palm oil), 5 weight% high molecular weight polyethylene wax, 12 weight% ethylene vinyl acetate copolymer (Escorene U L 15019 CC), 13 weight% of a further ethylene vinyl acetate copolymer (Escorene UL40028 CC), and 10 weight% of rosin ester tackifying agent. The results are shown in Table I below.

### Example 7

A composition was prepared by formulating 60 weight% vegetable wax (fatty acid ester based), 5 weight% high molecular weight polyethylene wax, 12 weight% ethylene vinyl acetate copolymer (Escorene UL 15019 CC), 13 weight% of a further ethylene vinyl acetate copolymer (Escorene UL40028 CC), and 10 weight% of rosin ester tackifying agent. The results are shown in Table I below.

### Example 8

A composition was prepared by formulating 60 weight% vegetable wax (derived from canola oil), 5 weight% high molecular weight polyethylene wax, 12 weight% ethylene vinyl acetate copolymer (Escorene UL 15019 CC), 13 weight% of a further ethylene vinyl acetate copolymer (Escorene UL40028 CC), and 10 weight% of rosin ester tackifying agent. The results are shown in Table I below.

**Table I**

| **Example No.** | **1** | **2** | **3** | **4** | **5** | **6** | **7** | **8** |
|---|---|---|---|---|---|---|---|---|
| **Brookfield viscosity at 150°C [mPas]** | 5300 | 6400 | 2800 | 3700 | 3000 | 340 | 1500 | 340 |
| **Drop point [°C]** | 108.5 | 102.4 | 106.5 | 99.0 | 105.4 | 105.2 | 92.4 | 104.0 |
| **Melting point (Koflerbank) [°C]** | 62°C¹ | 68°C¹ | 62°C¹ | 60°C¹ | 56°C¹ | <46°C | 80°C¹ | 58°C¹ |
| **PZ [25°C]** | | | 8 (7-9) | 6(5-8) | 9 (7-10) | 3 (2-5) | 4 (2-6) | 3 (2-4) |
| **Seal test, 90°C/90°C i/i** | E3 | E3 | E3 | E3 | E3 | E3 | E3 | A2-E2 |
| **Seal test, 120°C/23°C i/a** | E3 | E3 | E3 | E3 | E3 | E3 | E3 | C-E2 |
| **Seal test, 90°C/90°C PS/i** | E3 | E3 | E3 | E3 | E3 | E3 | E3 | m.a. |

| | | | | | | | | |
|---|---|---|---|---|---|---|---|---|
| Notes: ¹ Beginning E3: heavy tearing of fibers E2: light tearing of fibers C: cohesive failure of adhesive A1: adhesive failure (adhesive remains on support material) A2: Adhesive failure (adhesive transfers to other substrate) m.a.: minimal adhesion i/i : Innenseite gegen Innenseite (sealing of inside against inside) i/a: Innenseite gegen Außenseite (sealing of inside against outside) PS /i: Polystyrol gegen Innseite (sealing of Polystyrene against inside) PZ: Penetrationszahl - (Needle Penetration - 1/10mm indicates hardness of a product) | | | | | | | | |

The above specific examples are not intended to limit the present invention. Rather, other embodiments are within the appended claims.

## Claims

1. A hot-melt adhesive composition being free from paraffin, wherein the composition comprises a mixture of a vegetable wax and a high molecular weight wax, wherein the high molecular weight wax is selected from a polyethylene wax, oxidized polyethylene wax, and microcrystalline wax and has an average molecular weight of more than 500.

2. The hot-melt adhesive composition according to claim 1, comprising:
(a) a polymer;
(b) a tackifying agent; and
(c) the mixture of vegetable wax and high molecular weight wax.

3. The hot-melt adhesive composition according to claim 1 or claim 2, wherein the weight ratio of vegetable wax to high molecular weight wax is 15:1 to 2:1, preferably 12:1 to 3:1, more preferably 6:1 to 4:1.

4. The hot-melt adhesive composition according to any one of claims 1 to 3, wherein the polymer is included in an amount of 15 to 50 weight%, and/or
wherein the tackifying agent is included in an amount of 5 to 50 weight%, and/or
wherein the mixture of vegetable wax and high molecular weight wax is included in an amount of 15 to 80 weight%,
each based on the total weight of the hot-melt adhesive composition.

5. The hot-melt adhesive composition according to any one of claims 1 to 4, wherein the vegetable wax is selected from hydrogenated oils of soybean, cottonseed, corn, sunflower, canola, palm, coconut, rape, carambe, and linseed, preferably canola, palm and soybean, more preferably canola and palm or mixtures thereof; and/or
the vegetable wax has an iodine value of less than 30; ASTM D1959-97 and/or
the vegetable wax has a melting point of 45°C to 90°C, preferably 50°C to 80°C.

6. The hot-melt adhesive composition according to any one of claims 1 to 5, wherein the high molecular weight wax has a content of hydrocarbons with a carbon number of less than 25 of below 5 weight%.

7. The hot-melt adhesive composition according to any one of claims 1 to 6, wherein the polymer is selected from ethylene copolymers, preferably ethylene vinyl acetate copolymer (EVA).

8. The hot-melt adhesive composition according to any one of claims 1 to 7, wherein the hot-melt adhesive has a viscosity at 150°C of 100 to 10000 mPas, preferably from 500 to 7000 mPas determined in accordance with ASTM 11D 3236-88; and/or
the hot-melt adhesive has a Mettler drop melting point of 90°C or more determined in accordance with DIN 51801, part 2.

9. Use of a hot-melt adhesive composition according to any one of claims 1 to 8 for heat seal applications.

10. Use according to claim 9, wherein the heat seal application is packaging, preferably food packaging.

11. Use according to claim 10, wherein the food is a fatty food.

12. Use according to claim 10 or claim 11, wherein the hot-melt adhesive is in direct food contact.

13. Use according to any one of claims 10 to 12, comprising:
obtaining at least one substrate comprising a coating of the hot-melt adhesive according to any one of claims 1 to 8;
placing a food article within the substrate; and
heat reactivating the hot-melt adhesive to form a packaged food article.

14. A substrate comprising a coating of the hot-melt adhesive composition according to any one of claims 1 to 8.

15. The substrate according to claim 14, wherein the substrate is select from a group consisting of paper, metal foil, and plastic films.

## Patentansprüche

1. Schmelzkleberzusammensetzung, welche frei von Paraffin ist, wobei die Zusammensetzung ein Gemisch eines pflanzlichen Wachses und eines Wachses mit einem hohen Molekulargewicht enthält, wobei das Wachs mit einem hohen Molekulargewicht ausgewählt ist aus einem Polyethylenwachs, einem oxidierten Polyethylenwachs und einem mikrokristallinen Wachs, und ein mittleres Molekulargewicht von mehr als 500 aufweist.

2. Schmelzkleberzusammensetzung gemäß Anspruch 1, umfassend:
(a) ein Polymer;
(b) ein klebrig machendes Mittel; und
(c) das Gemisch aus einem pflanzlichen Wachs und einem Wachs mit einem hohen Molekulargewicht.

3. Schmelzkleberzusammensetzung gemäß Anspruch 1 oder Anspruch 2, wobei das Gewichtsverhältnis des pflanzlichen Wachses zu dem Wachs mit einem hohen Molekulargewicht 15:1 bis 2:1, vorzugsweise 12:1 bis 3:1, stärker bevorzug 6:1 bis 4:1 beträgt.

4. Schmelzkleberzusammensetzung gemäß einem der Ansprüche 1 bis 3, wobei das Polymer in einer Menge von 15 bis 50 Gew.-% enthalten ist, und/oder wobei das klebrig machende Mittel in einer Menge von 5 bis 50 Gew.-% enthalten ist, und/oder
wobei das Gemisch aus einem pflanzlichen Wachs und einem Wachs mit einem hohen Molekulargewicht in einer Menge von 15 bis 80 Gew.-% enthalten ist,
jeweils basierend auf dem Gesamtgewicht der Schmelzkleberzusammensetzung.

5. Schmelzkleberzusammensetzung gemäß einem der Ansprüche 1 bis 4, wobei das pflanzliche Wachs ausgewählt ist aus hydrierten Ölen von Sojabohne, Baumwollsamen, Mais, Sonnenblume, Canola, Palmen, Kokosnuss, Raps, Carambe, und Leinsamen, vorzugsweise Canola, Palmen und Sojabohne, stärker bevorzugt Canola und Palme, oder Gemische davon; und/oder das pflanzliche Wachs eine Jodzahl von weniger als 30 ASTM D1959-97 aufweist; und/oder
das pflanzliche Wachs einen Schmelzpunkt von 45°C bis 90°C, vorzugsweise 50°C bis 80°C aufweist.

6. Schmelzkleberzusammensetzung gemäß einem der Ansprüche 1 bis 5, wobei das Wachs mit einem hohen Molekulargewicht einen Gehalt an Kohlenwasserstoffen mit einer Kohlenstoffzahl von weniger 25 von weniger als 5 Gew.-% aufweist.

7. Schmelzkleberzusammensetzung gemäß einem der Ansprüche 1 bis 6, wobei das Polymer ausgewählt ist aus Ethylen-Copolymeren, vorzugweise Ethylenvinylacetat-Copolymer (EVA).

8. Schmelzkleberzusammensetzung gemäß einem der Ansprüche 1 bis 7, wobei der Schmelzkleber eine Viskosität bei 150°C von 100 bis 10.000 mPas, vorzugsweise 500 bis 7000 mPas aufweist, bestimmt gemäß ASTM 11D 3236-88; und/oder
der Schmelzkleber einen Tropfschmelzpunkt nach Mettler von 90°C oder mehr aufweist, bestimmt gemäß DIN 51801, Teil 2.

9. Verwendung einer Schmelzkleberzusammensetzung gemäß einem der Ansprüche 1 bis 8 für Heißversiegelungsanwendungen.

10. Verwendung gemäß Anspruch 9, wobei die Heißversiegelungsanwendung Verpacken, vorzugsweise Verpacken von Lebensmittel ist.

11. Verwendung gemäß Anspruch 10, wobei das Lebensmittel ein fetthaltiges Lebensmittel ist.

12. Verwendung gemäß Anspruch 10 oder Anspruch 11, wobei der Schmelzkleber in direktem Kontakt mit dem Lebensmittel steht.

13. Verwendung gemäß einem der Ansprüche 10 bis 12 umfassend:
Erhalten mindestens eines Substrats, umfassend eine Beschichtung mit dem Schmelzkleber gemäß einem der Ansprüche 1 bis 8;
Platzieren des Lebensmittelgegenstandes innerhalb des Substrats; und
Wärmeaktivieren des Schmelzklebers, um einen verpackten Lebensmittelgegenstand bereitzustellen.

14. Substrat, umfassend eine Beschichtung mit der Schmelzkleberzusammensetzung gemäß einem der Ansprüche 1 bis 8.

15. Substrat gemäß Anspruch 14, wobei das Substrat ausgewählt ist aus der Gruppe, bestehend aus Papier, Metallfolie und Plastikfolie.

## Revendications

1. Composition adhésive thermofusible exempte de paraffine, la composition comprenant un mélange de cire végétale et de cire de poids moléculaire élevé, la de cire de poids moléculaire élevé étant sélectionnée parmi une cire de polyéthylène, une cire de polyéthylène oxydée et une cire microcristalline et ayant un poids moléculaire moyen de plus de 500.

2. Composition adhésive thermofusible selon la revendication 1, comprenant :
(a) un polymère ;
(b) un agent collant ; et
(c) le mélange de cire végétale et de cire de poids moléculaire élevé.

3. Composition adhésive thermofusible selon la revendication 1 ou la revendication 2, le rapport pondéral de la cire végétale sur la cire de poids moléculaire élevé étant de 15/1 à 2/1, de préférence de 12/1 à 3/1, plus préférablement de 6/1 à 4/1.

4. Composition adhésive thermofusible selon l'une quelconque des revendications 1 à 3, le polymère étant inclus en une quantité de 15 à 50 % en poids et/ou l'agent collant étant inclus en une quantité de 5 à 50 % en poids et/ou le mélange de cire végétale et de cire de poids moléculaire élevé étant inclus en une quantité de 15 à 80 % en poids, chacun sur la base du poids total de la composition adhésive thermofusible.

5. Composition adhésive thermofusible selon l'une quelconque des revendications 1 à 4, la cire végétale étant sélectionnée parmi les huiles hydrogénées de soja, de graine de coton, de maïs, de tournesol, de colza, de palme, de noix de coco, de navette, de crambe et de graine de lin, de préférence de colza, de palme et de soja, plus préférablement de colza et de palme ou leurs mélanges ; et/ou la cire végétale ayant un indice d'iode de moins de 30, ASTM D1959-97, et/ou la cire végétale ayant un point de fusion de 45°C à 90°C, de préférence de 50°C à 80°C.

6. Composition adhésive thermofusible selon l'une quelconque des revendications 1 à 5, la cire de poids moléculaire élevé ayant une teneur en hydrocarbures avec un nombre de carbones de moins de 25 en dessous de 5 % en poids.

7. Composition adhésive thermofusible selon l'une quelconque des revendications 1 à 6, le polymère étant sélectionné parmi les copolymères d'éthylène, de préférence le copolymère d'éthylène-acétate de vinyle (EVA).

8. Composition adhésive thermofusible selon l'une quelconque des revendications 1 à 7, l'adhésif thermofusible ayant une viscosité à 150°C de 100 à 10000 mPa, de préférence de 500 à 7000 mPa déterminée selon ASTM 11D 3236-88 ; et/ou l'adhésif thermofusible ayant un point de fusion Mettler de 90°C ou plus déterminé selon DIN 51801, 2ème partie.

9. Utilisation d'une composition adhésive thermofusible selon l'une quelconque des revendications 1 à 8 pour des applications de thermocollage.

10. Utilisation selon la revendication 9, l'application de thermocollage étant le conditionnement, de préférence le conditionnement de produits alimentaires.

11. Utilisation selon la revendication 10, les produits alimentaires étant des produits alimentaires gras.

12. Utilisation selon la revendication 10 ou la revendication 11, l'adhésif thermofusible étant en contact direct avec les produits alimentaires.

13. Utilisation selon l'une quelconque des revendications 10 à 12, comprenant :
l'obtention d'au moins un substrat comprenant l'enrobage de l'adhésif thermofusible selon l'une quelconque des revendications 1 à 8 ;
le placement de l'article alimentaire à l'intérieur du substrat ; et
la réactivation thermique de l'adhésif thermofusible afin de former un article alimentaire conditionné.

14. Substrat comprenant un enrobage de la composition adhésive thermofusible selon l'une quelconque des revendications 1 à 8.

15. Substance selon la revendication 14, le substrat étant sélectionné dans un groupe constitué par le papier, la feuille métallique et les films plastiques.
